# EUROPÄISCHE PATENTSCHRIFT

(11) **EP 3 089 328 B1**
(45) Veröffentlichungstag und Bekanntmachung des Hinweises auf die Patenterteilung: **19.04.2017**
(21) Anmeldenummer: 15165240.1
(22) Anmeldetag: 27.04.2015
(51) Int. Cl.: H02K 1/27, H02K 15/03

(54) **ROTOR EINER ELEKTRISCHEN MASCHINE**
ROTOR OF AN ELECTRIC MACHINE
ROTOR D'UNE MACHINE ÉLECTRIQUE

(43) Veröffentlichungstag der Anmeldung: 02.11.2016
(73) Patentinhaber: Siemens Aktiengesellschaft, 80333 München (DE)
(72) Erfinder: Eckert, Rainer, 97616 Bad Neustadt / Herschfeld (DE); Kraus, Andreas, 97647 Sondheim (DE)

(56) Entgegenhaltungen:
- WO-A1-82/04505
- WO-A1-2013/083186
- DE-C1- 578 799
- US-A1- 2003 193 255
- US-B1- 9 130 437

## Beschreibung

Die Erfindung betrifft einen Rotor einer elektrischen Maschine mit mehreren an einer Außenseite des Rotors angeordneten Dauermagneten.

Derartige Rotoren werden beispielsweise in Servomotoren und schnell drehenden Motoren verwendet. Bei Rotoren mit außen liegenden Dauermagneten werden die Dauermagneten oft mit Bandagebändern aus reißfesten Materialien bandagiert, um sie zu fixieren. Zur Aufnahme der Bandenden eines Bandagebandes werden bei geblechten Rotoren in der Regel so genannte Endscheiben, die jeweils an einem Endbereich eines Rotorblechpaketes des Rotors anliegen und an denen die Bandenden fixiert werden, verwendet.

WO 82/04505 A1 offenbart einen Rotor für eine permanentmagnetisch erregte elektrische Maschine, bei dem Magnetsegmente außen auf einem rotierenden Eisenträger mittels magnetisierbarer Klebe-und/oder Haltemittel befestigt sind. Beispielsweise sind die Magnetsegmente mit einer Bandage umwickelt, welche mit einem magnetisierbaren Stoff getränkt ist.

US 2003/0193255 A1 offenbart eine Rotorstruktur für einen elektrischen Motor mit mehreren Dauermagneten, die an einem Außenumfang einer Rotorkernanordnung angeordnet sind und mit einer Bandage umwickelt sind, die durch einen Sicherungsring an der Rotorkernanordnung gehalten wird.

WO 2013/083186 A1 offenbart einen Rotor für eine elektrische Maschine mit einem Rotorkörper, wenigstens einer an dem Rotorkörper angeordneten Rotorkomponente und einer um die Rotorkomponente gewickelten Bandage aus einer drahtartigen Struktur.

Der Erfindung liegt die Aufgabe zugrunde, einen verbesserten Rotor einer elektrischen Maschine mit mehreren an einer Außenseite des Rotors angeordneten Dauermagneten und ein Verfahren zur Herstellung eines derartigen Rotors anzugeben.

Die Aufgabe wird erfindungsgemäß hinsichtlich des Rotors durch die Merkmale des Anspruchs 1 und hinsichtlich des Verfahrens durch die Merkmale des Anspruchs 8 gelöst.

Vorteilhafte Ausgestaltungen der Erfindung sind Gegenstand der Unteransprüche.

Ein erfindungsgemäßer Rotor einer elektrischen Maschine umfasst mehrere an einer Außenseite des Rotors angeordnete Dauermagneten und ein um die Dauermagneten gewickeltes Bandageband zur Fixierung der Dauermagneten. Dabei weist das Bandageband ein erstes Bandende auf, das an einer Oberfläche wenigstens eines Dauermagnet befestigt ist. Ferner weist ein äußerster Bandabschnitt ein zweites Bandende des Bandagebandes auf, das an einem unter dem äußersten Bandabschnitt liegenden Bandabschnitt befestigt ist. Das Bandageband ist mit einer Vorspannung derart um die Dauermagneten gewickelt, dass im Bereich jedes Dauermagnet wenigstens ein Bandabschnitt eine vorgebbare Mindestvorspannung aufweist.

Im Unterschied zu aus dem Stand der Technik bekannten Rotoren mit außenseitig angeordneten und durch ein Bandageband fixierten Dauermagneten sind die Bandenden des Bandagebandes also nicht jeweils an einer Endscheibe des Rotors, sondern an einer Oberfläche wenigstens eines Dauermagnet bzw. an dem Bandageband selbst befestigt. Dadurch kann eine Endscheibe zur Befestigung der Bandenden entfallen, wodurch vorteilhaft einerseits die Kosten für die Herstellung des Rotors gesenkt werden und andererseits der Rotor und die elektrische Maschine kompakter gebaut werden können, da durch den Entfall einer Endscheibe die Längsausdehnung des Rotors reduziert werden kann. Durch die Umwicklung aller Dauermagneten mit einer vorgegebenen Mindestvorspannung jeweils wenigstens eines Bandabschnitts des Bandagebandes können außerdem alle Dauermagneten sicher an der Außenseite des Rotors gehalten werden.

Eine Ausgestaltung der Erfindung sieht vor, dass das erste Bandende mittels einer Klebeverbindung an der Oberfläche wenigstens eines Dauermagnet befestigt ist. Dabei umfasst die Klebeverbindung vorzugsweise wenigstens einen das erste Bandende an der Oberfläche wenigstens eines Dauermagnet fixierenden Klebestreifen.

Eine Klebeverbindung, insbesondere mittels Klebestreifen, ermöglicht vorteilhaft eine einfach und kostengünstig realisierbare Befestigung des Bandendes an wenigstens einem Dauermagnet.

Eine weitere Ausgestaltung der Erfindung sieht vor, dass das erste Bandende in einem mittleren Bereich der Längsausdehnung des Rotors angeordnet ist.

Eine derartige zentrale Befestigung des Bandendes ist vorteilhaft, weil sie eine symmetrische Aufbringung des Bandagebandes ermöglicht.

Eine weitere Ausgestaltung der Erfindung sieht vor, dass das Bandageband mehrere sich aneinander anschließende Bandabschnitte aufweist, die jeweils spiralartig um die Dauermagneten gewickelt sind. Dabei sind je zwei benachbarte Bandabschnitte in zueinander entgegen gesetzten Wickelrichtungen gewickelt und einer der beiden Bandabschnitte ist wenigstens teilweise um den anderen Bandabschnitt gewickelt. Vorzugsweise bilden die Bandabschnitte ferner wenigstens zwei übereinander liegende Bandagelagen.

Eine derartige spiralartige, insbesondere wenigstens zweilagige, Umwicklung der Dauermagneten mit dem Bandageband in zueinander entgegen gesetzten Wickelrichtungen ermöglicht vorteilhaft eine stabile Befestigung der Dauermagneten, wobei eine Vorspannung des Bandagebandes in verschiedenen Bereichen des Rotors erforderlichenfalls variiert werden kann.

Beispielsweise ist das zweite Bandende dabei an dem unter dem äußersten Bandabschnitt liegenden Bandabschnitt angeschweißt.

Dadurch wird das zweite Bandende vorteilhaft besonders zuverlässig und dauerhaft fixiert.

Bei dem erfindungsgemäßen Verfahren zur Herstellung eines erfindungsgemäßen Rotors einer elektrischen Maschine wird das erste Bandende des Bandagebandes an einer Oberfläche wenigstens eines Dauermagnet befestigt und anschließend werden mehrere sich aneinander anschließende Bandabschnitte des Bandagebandes nacheinander jeweils spiralartig um Dauermagneten gewickelt. Dabei werden je zwei benachbarte Bandabschnitte in zueinander entgegen gesetzten Wickelrichtungen gewickelt und einer der beiden Bandabschnitte wird wenigstens teilweise um den anderen Bandabschnitt gewickelt. Ferner wird ein zweites Bandende des Bandagebandes, das ein Ende eines äußerstes Bandabschnitts bildet, an einem unter dem äußersten Bandabschnitt liegenden Bandabschnitt befestigt, und das Bandageband wird mit einer Vorspannung derart um die Dauermagneten gewickelt, dass im Bereich jedes Dauermagnet wenigstens ein Bandabschnitt des Bandagebandes eine vorgebbare Mindestvorspannung aufweist.

Das Verfahren ermöglicht die Herstellung eines Rotors mit oben bereits genannten Vorteilen. Insbesondere wird keine Endscheibe zur Fixierung der Bandenden benötigt.

Vorzugsweise wird das zweite Bandende an dem unter dem äußersten Bandabschnitt liegenden Bandabschnitt angeschweißt und mittels eines Folienklebebandes an den unter dem äußersten Bandabschnitt liegenden Bandabschnitt angedrückt. Das Folienklebeband wird vorzugsweise von dem Bandageband entfernt, nachdem die Schweißverbindung des äußersten Bandabschnitts mit dem unter ihm liegenden Bandabschnitt ausgehärtet ist.

Durch das Anschweißen des zweiten Bandendes wird eine zuverlässige und dauerhafte Fixierung des zweiten Bandendes ermöglicht. Durch das Andrücken des zweiten Bandendes an den darunter liegenden Bandabschnitt mittels eines Folienklebebandes wird dabei vorteilhaft verhindert, dass ein Teil des zweiten Bandendes von dem Rotor absteht und dadurch ein Schleifen des Rotors an einem den Rotor umgebenden Stator der elektrischen Maschine verursachen kann. Durch das Entfernen des Folienklebebandes nach dem Aushärten der Schweißverbindung wird vorteilhaft das Gewicht des Rotors reduziert und eine durch das Folienklebeband verursachte Asymmetrie des Rotors vermieden.

Insbesondere sieht die Erfindung vor, einen erfindungsgemäßen Rotor in einer elektrischen Maschine zu verwenden, die als eine Synchronmaschine, insbesondere als ein Servomotor, ausgebildet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch eine elektrische Maschine in einer Schnittdarstellung,
- FIG 2: eine Seitenansicht eines Rotors einer elektrischen Maschine mit mehreren an einer Außenseite des Rotors angeordneten Dauermagneten, um die ein Bandageband gewickelt wird, in einer ersten Phase des Aufbringens des Bandagebandes,
- FIG 3: eine Seitenansicht des in Figur 1 dargestellten Rotors in einer zweiten Phase des Aufbringens des Bandagebandes,
- FIG 4: eine Seitenansicht des in Figur 1 dargestellten Rotors in einer dritten Phase des Aufbringens des Bandagebandes,
- FIG 5: eine Seitenansicht des in Figur 1 dargestellten Rotors in einer vierten Phase des Aufbringens des Bandagebandes, und
- FIG 6: eine Seitenansicht des in Figur 1 dargestellten Rotors in einer fünften Phase des Aufbringens des Bandagebandes.

Einander entsprechende Teile sind in allen Figuren mit den gleichen Bezugszeichen versehen.

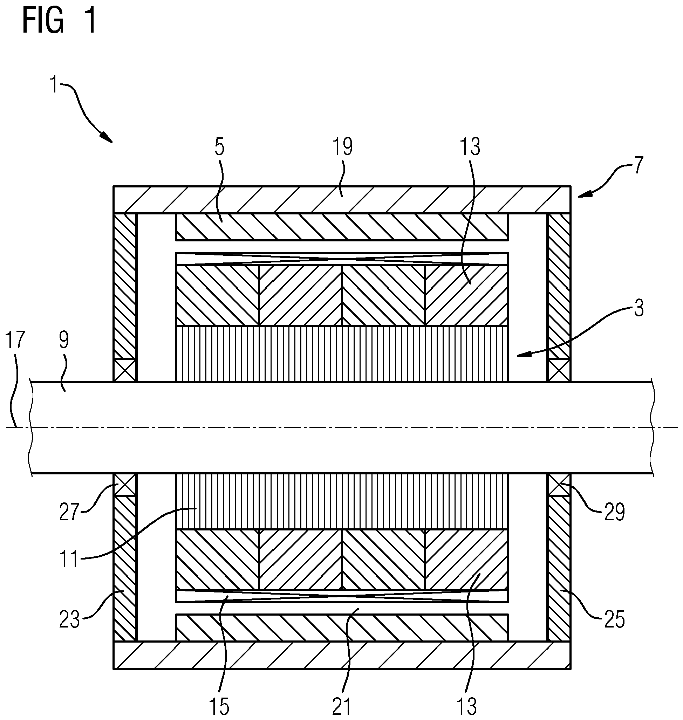

Figur 1 zeigt schematisch eine elektrische Maschine 1 in einer Schnittdarstellung. Die elektrische Maschine 1 umfasst einen Rotor 3, einen Stator 5 und ein Maschinengehäuse 7. Die elektrische Maschine 1 ist beispielsweise als Servomotor, der ein Synchronmotor ist, ausgebildet.

Der Rotor 3 umfasst eine Rotorwelle 9, ein um einen Abschnitt der Rotorwelle 9 angeordnetes Rotorblechpaket 11, mehrere an einer Außenseite des Rotorblechpakets 11 angeordnete Dauermagneten 13 und ein um die Dauermagneten 13 gewickeltes Bandageband 15 zur Fixierung der Dauermagneten 13 an dem Rotorblechpaket 11. Eine Längsachse 17 der Rotorwelle 9 definiert eine axiale Richtung. Die Dauermagneten 13 sind derart am Rotorblechpaket 11 angeordnet, dass sie mehrere Magnetreihen axial hintereinander angeordneter Dauermagneten 13 bilden, wobei die Reihen nebeneinander und zueinander parallel am Umfang des Rotorblechpakets 11 verlaufen. Optional weist das Rotorblechpaket 11 (nicht dargestellte) Öffnungen zur Aufnahme eines Wuchtkits auf. Das Bandageband 15 ist beispielsweise aus einem carbonfaserverstärkten Kunststoff (CFK) oder einem glasfaserverstärkten Kunststoff (GFK) gefertigt, der optional eine zusätzliche Harzmatrix enthält.

Das Maschinengehäuse 7 umfasst einen im Wesentlichen zylindrischen Gehäusemantel 19, der das Rotorblechpaket 11, die Dauermagneten 13 und das Bandageband 15 des Rotors 3 umgibt und an dessen Innenoberfläche der Stator 5 von dem Rotor 3 durch einen Luftspalt 21 beabstandet angeordnet ist. Ferner umfasst das Maschinengehäuse 7 zwei im Wesentlichen scheibenförmige Lagerschilde 23, 25, die an sich axial gegenüber liegenden Enden des Gehäusemantels 19 angeordnet sind und jeweils ein Lager 27, 29 tragen, in dem die Rotorwelle 9 gelagert ist.

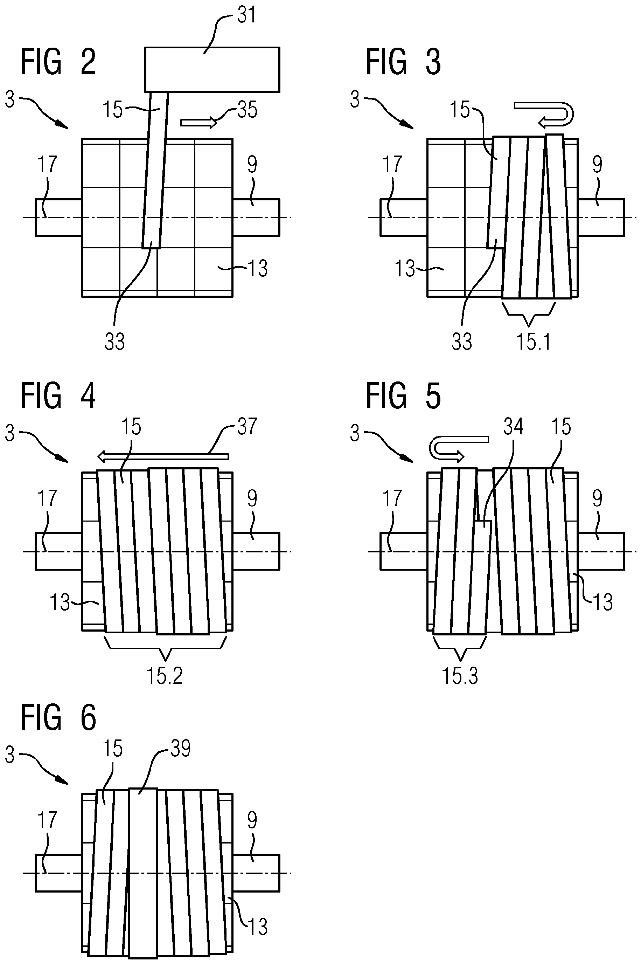

Die Figuren 2 bis 6 illustrieren ein erfindungsgemäßes Verfahren zum Umwickeln der Dauermagneten 13 mit dem Bandageband 15 bei der Herstellung des Rotors 3. Dabei zeigen die Figuren 2 bis 6 eine Seitenansicht des Rotors 3 in verschiedenen Phasen des Aufbringens des Bandagebandes 15 mittels einer (nur schematisch dargestellten) Badagiervorrichtung 31.

Figur 2 zeigt den Beginn des Aufbringens des Bandagebandes 15, bei dem ein erstes Bandende 33 des Bandagebandes 15 in einem mittleren Bereich der axialen Ausdehnung des Rotors 3 an einer Oberfläche wenigstens eines Dauermagnet 13 befestigt wird. Dabei wird das erste Bandende 33 mittels einer Klebeverbindung, beispielsweise mittels wenigstens eines Klebestreifens, an der Oberfläche des wenigstens einen Dauermagnet 13 befestigt.

Anschließend wird gemäß der Darstellung in Figur 3 ein erster Bandabschnitt 15.1 des Bandagebandes 15 vom ersten Bandende 33 aus mittels der Badagiervorrichtung 31 in einer ersten Wickelrichtung 35 bis in die Nähe erster axialer Enden der Magnetreihen spiralartig um Dauermagneten 13 gewickelt.

Dann wird die Wickelrichtung des Bandagebandes 15 umgekehrt und ein sich an den ersten Bandabschnitt 15.1 anschließender zweiter Bandabschnitt 15.2 des Bandagebandes 15 wird gemäß der Darstellung in Figur 4 in einer der ersten Wickelrichtung 35 entgegen gesetzten zweiten Wickelrichtung 37 bis in die Nähe zweiter axialer Enden der Magnetreihen spiralartig um Dauermagneten 13 und den ersten Bandabschnitt 15.1 gewickelt.

Anschließend wird die Wickelrichtung des Bandagebandes 15 gemäß der Darstellung in Figur 5 wieder umgekehrt und ein sich an den zweiten Bandabschnitt 15.2 anschließender dritter Bandabschnitt 15.3 des Bandagebandes 15 wird in der ersten Wickelrichtung 35 bis etwa zur Mitte der Magnetreihen spiralartig um Dauermagneten 13 und einen Teil des zweiten Bandabschnitts 15.2 gewickelt, so dass die Bandabschnitte 15.1 bis 15.3 zwei übereinander liegenden Bandagelagen bilden.

Danach wird ein zweites Bandende 34 des Bandagebandes 15 am Ende des dritter Bandabschnitts 15.3 an den zweiten Bandabschnitt 15.2 angeschweißt und gemäß Figur 6 mittels eines Folienklebebandes 39 an den zweiten Bandabschnitt 15.2 gedrückt. Abschließend wird das Folienklebeband 39 von dem Bandageband 15 entfernt, nachdem die Schweißverbindung des dritten Bandabschnitts 15.3 mit dem zweiten Bandabschnitt 15.2 ausgehärtet ist.

Bei dem in den Figuren 2 bis 6 dargestellten Aufbringen des Bandagebandes 15 wird das Bandageband 15 mit einer Vorspannung um die Dauermagneten 13 gewickelt, wobei die Vorspannung vorzugsweise während des Wickelns von einem Anfangswert auf einen Endwert gesteigert und dann auf dem Endwert gehalten wird, so dass im Bereich jedes Dauermagnet 13 wenigstens ein Bandabschnitt 15.1 bis 15.3 eine vorgebbare Mindestvorspannung aufweist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotor (3) einer elektrischen Maschine (1), der Rotor (3) umfassend
- mehrere an einer Außenseite des Rotors (3) angeordnete Dauermagneten (13)
- und ein um die Dauermagneten (13) gewickeltes Bandageband (15) zur Fixierung der Dauermagneten (13),
**dadurch gekennzeichnet, dass**
- das Bandageband (15) ein erstes Bandende (33), das an einer Oberfläche wenigstens eines Dauermagnet (13) befestigt ist, und ein zweites Bandende (34), das ein Ende eines äußersten Bandabschnitts (15.3) des Bandagebandes (15) ist und an einem unter dem äußersten Bandabschnitt (15.3) liegenden Bandabschnitt (15.2) des Bandagebandes (15) befestigt ist, aufweist,
- und das Bandageband (15) mit einer Vorspannung derart um die Dauermagneten (13) gewickelt ist, dass im Bereich jedes Dauermagneten (13) wenigstens ein Bandabschnitt (15.1 bis 15.3) des Bandagebandes (15) eine vorgebbare Mindestvorspannung aufweist.

2. Rotor (3) nach Anspruch 1,
**dadurch gekennzeichnet, dass** das erste Bandende (33) mittels einer Klebeverbindung an der Oberfläche wenigstens eines Dauermagneten (13) befestigt ist.

3. Rotor (3) nach Anspruch 2,
**dadurch gekennzeichnet, dass** die Klebeverbindung wenigstens einen das erste Bandende (33) an der Oberfläche wenigstens eines Dauermagnet (13) fixierenden Klebestreifen umfasst.

4. Rotor (3) nach einem der vorhergehenden Ansprüche,
**dadurch gekennzeichnet, dass** das erste Bandende (33) in einem mittleren Bereich der Längsausdehnung des Rotors (3) angeordnet ist.

5. Rotor (3) nach der vorhergehenden Ansprüche,
**dadurch gekennzeichnet, dass** das Bandageband (15) mehrere sich aneinander anschließende Bandabschnitte (15.1 bis 15.3) aufweist, die jeweils spiralartig um die Dauermagneten (13) gewickelt sind, wobei je zwei benachbarte Bandabschnitte (15.1 bis 15.3) in zueinander entgegen gesetzten Wickelrichtungen (35, 37) gewickelt sind und einer der beiden Bandabschnitte (15.1 bis 15.3) wenigstens teilweise um den anderen Bandabschnitt (15.1 bis 15.3) gewickelt ist.

6. Rotor (3) nach Anspruch 5,
**dadurch gekennzeichnet, dass** die Bandabschnitte (15.1 bis 15.3) wenigstens zwei übereinander liegende Bandagelagen bilden.

7. Rotor (3) nach einem der vorhergehenden Ansprüche, **dadurch gekennzeichnet, dass** das zweite Bandende (34) an dem unter dem äußersten Bandabschnitt (15.3) liegenden Bandabschnitt (15.2) angeschweißt ist.

8. Verfahren zur Herstellung eines gemäß einem der Ansprüche 1 bis 7 ausgebildeten Rotors (3) einer elektrischen Maschine (1), wobei
- das erste Bandende (33) des Bandagebandes (15) an einer Oberfläche wenigstens eines Dauermagnet (13) befestigt wird
- und anschließend mehrere sich aneinander anschließende Bandabschnitte (15.1 bis 15.3) des Bandagebandes (15) nacheinander jeweils spiralartig um Dauermagneten (13) gewickelt werden,
- wobei je zwei benachbarte Bandabschnitte (15.1 bis 15.3) in zueinander entgegen gesetzten Wickelrichtungen (35, 37) gewickelt werden und einer der beiden Bandabschnitte (15.1 bis 15.3) wenigstens teilweise um den anderen Bandabschnitt (15.1 bis 15.3) gewickelt wird,
- und wobei ein zweites Bandende (34) des Bandagebandes (15), das ein Ende eines äußersten Bandabschnitts (15.3) bildet, an einem unter dem äußersten Bandabschnitt (15.3) liegenden Bandabschnitt (15.2) befestigt wird
- und das Bandageband (15) mit einer Vorspannung derart um die Dauermagneten (13) gewickelt wird, dass im Bereich jedes Dauermagnet (13) wenigstens ein Bandabschnitt (15.1 bis 15.3) des Bandagebandes (15) eine vorgebbare Mindestvorspannung aufweist.

9. Verfahren nach Anspruch 8,
**dadurch gekennzeichnet, dass** das zweite Bandende (34) an dem unter dem äußersten Bandabschnitt (15.3) liegenden Bandabschnitt (15.2) angeschweißt wird und mittels eines Folienklebebandes (39) an den unter dem äußersten Bandabschnitt (15.3) liegenden Bandabschnitt (15.2) angedrückt wird.

10. Verfahren nach Anspruch 9,
**dadurch gekennzeichnet, dass** das Folienklebeband (39) von dem Bandageband (15) entfernt wird, nachdem die Schweißverbindung des äußerstes Bandabschnitts (15.3) mit dem unter ihm liegenden Bandabschnitt (15.2) ausgehärtet ist.

11. Elektrische Maschine (1) mit einem gemäß einem der Ansprüche 1 bis 7 ausgebildeten Rotor (3).

12. Elektrische Maschine (1) nach Anspruch 11, die als eine Synchronmaschine, insbesondere als ein Servomotor, ausgebildet ist.

## Claims

1. Rotor (3) of an electric machine (1), the rotor (3) comprising
- a number of permanent magnets (13) arranged on an exterior of the rotor (3)
- and a bandage tape (15) wound around the permanent magnets (13) for fixing the permanent magnets (13),
**characterised in that**
- the bandage tape (15) has a first tape end (33), which is fastened to a surface of at least one permanent magnet (13), and a second tape end (34), which is an end of an outermost tape section (15.3) of the bandage tape (15) and is fastened to a tape section (15.2) of the bandage tape (15) disposed below the outermost tape section (15.3),
- and the bandage tape (15) is wound around the permanent magnets (13) with a prestress such that in the region of each permanent magnet (13), at least one tape section (15.1 to 15.3) of the bandage tape (15) has a predeterminable minimum prestress.

2. Rotor (3) according to claim 1,
**characterised in that** the first tape end (33) is fastened to the surface of at least one permanent magnet (13) by means of a bonded connection.

3. Rotor (3) according to claim 2,
**characterised in that** the bonded connection comprises at least one adhesive strip fixing the first tape end (33) to the surface of at least one permanent magnet (13).

4. Rotor (3) according to one of the preceding claims,
**characterised in that** the first tape end (33) is arranged in a central region of the longitudinal extent of the rotor (3).

5. Rotor (3) according to the preceding claims, **characterised in that** the bandage tape (15) has a number of adjoining tape sections (15.1 to 15.3), which are each wound spirally around the permanent magnets (13), wherein each two adjacent tape sections (15.1 to 15.3) are wound in opposite winding directions (35, 37) and one of the two tape sections (15.1 to 15.3) is wound at least partially around the other tape section (15.1 to 15.3).

6. Rotor (3) according to claim 5,
**characterised in that** the tape sections (15.1 to 15.3) form at least two bandage layers disposed one above the other.

7. Rotor (3) according to one of the preceding claims,
**characterised in that** the second tape end (34) is welded to the tape section (15.2) disposed below the outermost tape section (15.3).

8. Method for producing a rotor (3) of an electric machine (1) embodied according to one of claims 1 to 7, wherein
- the first tape end (33) of the bandage tape (15) is fastened to a surface of at least one permanent magnet (13)
- and a number of adjoining tape sections (15.1 to 15.3) of the bandage tape (15) are wound consecutively in each case spirally around permanent magnets (13),
- wherein each two adjacent tape sections (15.1 to 15.3) are wound in opposite winding directions (35, 37) and one of the two tape sections (15.1 to 15.3) is wound at least partially around the other tape section (15.1 to 15.3),
- and wherein a second tape end (34) of the bandage tape (15), which forms an end of an outermost tape section (15.3), is fastened to a tape section (15.2) disposed below the outermost tape section (15.3)
- and the bandage tape (15) is wound around the permanent magnets (13) with a prestress such that in the region of each permanent magnet (13), at least one tape section (15.1 to 15.3) of the bandage tape (15) has a predeterminable minimum prestress.

9. Method according to claim 8,
**characterised in that** the second tape end (34) is welded to the tape section (15.2) disposed below the outermost tape section (15.3) and presses on the tape section (15.2) disposed below the outermost tape section (15.3) by means of an adhesive film tape (39).

10. Method according to claim 9,
**characterised in that** the adhesive film tape (39) is then remote from the bandage tape (15), since the welded connection of the outermost tape section (15.3) is hardened with the tape section (15.2) disposed therebelow.

11. Electric machine (1) having a rotor (3) embodied according to one of claims 1 to 7.

12. Electric machine (1) according to claim 11, which is embodied as a synchronous machine, in particular as a servomotor.

## Revendications

1. Rotor (3) d'une machine (1) électrique, le rotor (3) comprenant
- plusieurs aimants (13) permanents mis sur une face extérieure du rotor (3),
- et un ruban (15) de bandage enroulé autour des aimants (13) permanents pour immobiliser les aimants (13) permanents,
**caractérisé en ce que**
- le ruban (15) de bandage a une première extrémité (33) de ruban, qui est fixée à une surface d'au moins un aimant (13) permanent, et une seconde extrémité (34) de ruban, qui est une extrémité d'un tronçon (15.3) le plus extérieur du ruban (15) de bandage et qui est fixée à un tronçon (15.2), se trouvant sous le tronçon (15.3) de ruban le plus à l'extérieur, du ruban (15) de bandage,
- et le ruban (15) de bandage est enroulé autour des aimants (13) permanents avec un précontrainte, de manière à ce que, dans la région de chaque aimant (13) permanent, au moins un tronçon (15.1 à 15.3) du ruban (15) de bandage ait une précontrainte minimum pouvant être donnée à l'avance.

2. Rotor (3) suivant la revendication 1,
**caractérisé en ce que** la première extrémité (33) du ruban est fixée au moyen d'un collage à la surface d'au moins un aimant (13) permanent.

3. Rotor (3) suivant la revendication 2,
**caractérisé en ce que** le collage comprend au moins une bande de colle immobilisant la première extrémité (33) du ruban à la surface d'au moins un aimant (13) permanent.

4. Rotor (3) suivant l'une des revendications précédentes, **caractérisé en ce que** la première extrémité (33) du ruban est mise dans une région médiane de l'étendue longitudinale du rotor (3).

5. Rotor (3) suivant l'une des revendications précédentes, **caractérisé en ce que** le ruban (15) de bandage a plusieurs tronçons (15.1 à 15.3) de ruban se raccordant les uns aux autres, qui sont enroulés respectivement en spirales autour des aimants (13) permanents, deux tronçons (15.1 à 15.3) de ruban voisins étant enroulés dans des sens (35, 37) d'enroulement contraires l'un à l'autre et l'un des deux tronçons (15.1 à 15.3) de ruban est enroulé, au moins en partie, autour de l'autre tronçon (15.1 à 15.3) de ruban.

6. Rotor (3) suivant la revendication 5,
**caractérisé en ce que** les tronçons (15.1 à 15.3) de ruban forment au moins deux couches de bandage superposées.

7. Rotor (3) suivant l'une des revendications précédentes, **caractérisé en ce que** la seconde extrémité (34) du ruban est soudée au tronçon (15.2) de ruban se trouvant en dessous du tronçon (15.3) de ruban le plus à l'extérieur.

8. Procédé de fabrication d'un rotor (3), constitué suivant l'une des revendications 1 à 7, d'une machine (1) électrique, dans lequel
- on fixe la première extrémité (3) du ruban (15) de bandage à une surface d'au moins un aimant (13) permanent,
- et ensuite on enroule respectivement en spirale autour des aimants (13) permanents l'un après l'autre plusieurs tronçons (15.1 à 15.3), se raccordant l'un à l'autre, du ruban (15) de bandage,
- dans lequel on enroule deux tronçons (15.1 à 15.3) de ruban voisins dans des sens (35, 37) d'enroulement contraires l'un à l'autre et on enroule l'un des deux tronçons (15.1 à 15.3) de ruban, au moins en partie, autour de l'autre tronçon (15.1 à 15.3) de ruban,
et dans lequel on fixe une deuxième extrémité (34) du ruban (15) de bandage, qui forme une extrémité d'un tronçon (15.3) de ruban le plus à l'extérieur, à un tronçon (15.2) de ruban se trouvant en dessous du tronçon (15.3) de ruban le plus à l'extérieur,
- et on enroule le ruban (15) de bandage autour des aimants (13) permanents avec une précontrainte, de manière à ce que, dans la région de chaque aimant (13) permanent, au moins un tronçon (15.1 à 15.3) du ruban (15) de bandage ait une précontrainte minimum pouvant être donnée à l'avance.

9. Procédé suivant la revendication 8,
**caractérisé en ce qu'**on soude la seconde extrémité (34) du ruban au tronçon (15.2) de ruban se trouvant en dessous du tronçon (15.3) de ruban le plus à l'extérieur et on l'applique, au moyen d'un ruban (39) collant, au tronçon (15.2) de ruban se trouvant en dessous du tronçon (15.3) de ruban le plus à l'extérieur.

10. Procédé suivant la revendication 9,
**caractérisé en ce qu'**on retire le ruban (39) collant du ruban (15) de bandage après que la soudure du tronçon (15.3) de ruban le plus à l'extérieur au tronçon (15.2) de ruban se trouvant sous lui ait durci.

11. Machine (1) électrique ayant un rotor (3) constitué suivant l'une des revendications 1 à 7.

12. Machine (1) électrique suivant la revendication 11, qui est constituée en machine synchrone, notamment en servomoteur.
